# EUROPEAN PATENT SPECIFICATION

(11) **EP 4 632 826 B1**
(45) Date of publication and mention of the grant of the patent: **02.12.2026**
(21) Application number: 24868623.0
(22) Date of filing: 13.09.2024
(51) Int. Cl.: H01M 4/04, B05C 5/02, B05C 11/10, G01F 1/76

(54) **ELECTRODE SLURRY COATING SYSTEM AND ELECTRODE SLURRY COATING METHOD**
ELEKTRODENAUFSCHLÄMMUNGSBESCHICHTUNGSSYSTEM UND ELEKTRODENAUFSCHLÄMMUNGSBESCHICHTUNGSVERFAHREN
SYSTÈME DE REVÊTEMENT DE SUSPENSION D'ÉLECTRODE ET PROCÉDÉ DE REVÊTEMENT DE SUSPENSION D'ÉLECTRODE

(30) Priority: 19.09.2023 KR 20230124418
(43) Date of publication of application: 15.10.2025
(73) Proprietor: LG Energy Solution, Ltd., Seoul 07335 (KR)
(72) Inventor: YOO, Houng Sik, Daejeon 34122 (KR); CHOI, Hyeon, Daejeon 34122 (KR); LEE, Jong Won, Daejeon 34122 (KR); KIM, Dong Hyun, Daejeon 34122 (KR); YANG, Gui Eum, Daejeon 34122 (KR)
(74) Representative: Plasseraud IP
(86) International application number: PCT/KR2024/013989
(87) International publication number: WO 2025/063646

(56) References cited:
- KR-A- 20190 083 530
- KR-A- 20200 117 593
- KR-A- 20220 067 399
- KR-A- 20220 067 399
- KR-A- 20230 021 491
- KR-A- 20230 021 491
- KR-A- 20230 083 032

## Description

### [Technical Field]

This application claims the benefit of priority based on Korean Patent Application No. 10-2023-0124418, filed on September 19, 2023.

The present disclosure relates to a coating system of an electrode slurry and a coating method of an electrode slurry.

### [Background]

With the technological development and increasing demand for mobile devices, the demand for secondary batteries as an energy source is increasing rapidly, and recently, the use of secondary batteries as a power source for electric vehicles (EVs) and hybrid electric vehicles (HEVs) has been realized, and among such secondary batteries, lithium secondary batteries with high energy density, high discharge voltage, and output stability are in high demand.

In particular, lithium secondary batteries used as power sources for electric vehicles (EVs) and hybrid electric vehicles (HEVs) require characteristics that can exhibit large output in a short time with high energy density.

Generally, lithium secondary batteries use a material capable of lithium ion intercalation and deintercalation as a negative electrode and a positive electrode, and are manufactured by filling an organic electrolyte or polymer electrolyte between the positive electrode and the negative electrode, and generate electrical energy through oxidation-reduction reactions when lithium ions undergo intercalation and deintercalation at the positive electrode and the negative electrode.

In this case, the negative electrode and positive electrode include an electrode active material layer on a current collector of each electrode, and such electrodes can be manufactured by mixing and stirring electrode active material with a binder and a solvent, a conductive material as needed, and a dispersant to prepare an electrode slurry, then coating the electrode slurry on the current collector using a slot die coater, followed by drying and rolling.

In the coating process of the electrode slurry, it is important to manage the loading amount of the electrode slurry to be uniform for electrode quality control. Conventionally, to manage the loading amount of the electrode slurry, during the initial condition adjustment step of the coating process, the loading amount of the electrode slurry was measured, and the RPM (Rotation per Minute) adjustment of the motor was repeatedly several times until the measured loading amount of the electrode slurry satisfied the measurement range, and the measurement information obtained using a web gauge on the dried electrode was converted and managed as the loading amount of the electrode slurry before drying. However, this method has a problem of significant material loss because the RPM adjustment of the motor is repeated several times, and changes in the loading amount of the electrode slurry due to changes in the flow rate caused by filter blockage or pump abnormality during the coating process can only be confirmed after the electrode drying process. In addition, since complete inspection is not possible with these methods, products that do not meet specifications may occur.

Therefore, there is a need for technological development for electrode slurry coating systems and methods that can manage the loading amount of electrode slurry in real time. KR 2022 0067399 A discloses a secondary battery coating system.

KR 2023 0021491 A discloses a loading amount control device and an electrode coating system comprising said device.

### [Summary]

### [Technical Problem]

The present disclosure is directed to providing an electrode slurry coating system and an electrode slurry coating method capable of reliably calculating a predictive value of a loading amount of an electrode slurry in real time during a coating process, and automatically controlling the loading amount so that the calculated predictive value satisfies a management range.

### [Technical Solution]

The invention is as defined by the appended claims.

According to one embodiment of the present invention, an electrode slurry coating system is provided. The electrode slurry coating system, including: a supply pipe connecting a supply tank for storing an electrode slurry and a coating die for coating the electrode slurry on an electrode base substrate, the supply pipe being a transfer path for the electrode slurry from the supply tank to the coating die; a mass flow meter installed on the path of the supply pipe, for measuring a flow rate of the electrode slurry transferred through the supply pipe and a density of the electrode slurry; and a control unit for calculating a loading amount predictive value of the electrode slurry based on a measurement information measured by the mass flow meter, and for controlling the calculated loading amount predictive value of the electrode slurry to satisfy a loading amount management range.

The electrode slurry coating system according to one embodiment, further including a pump configured to provide a driving force for transferring the electrode slurry to the coating die.

In one embodiment, the control unit includes a calculating unit that calculate the loading amount predictive value of the electrode slurry by substituting the flow rate value of the electrode slurry and the density value of the electrode slurry measured by the mass flow meter into the following equation 1 and/or equation 2. [Equation 1] 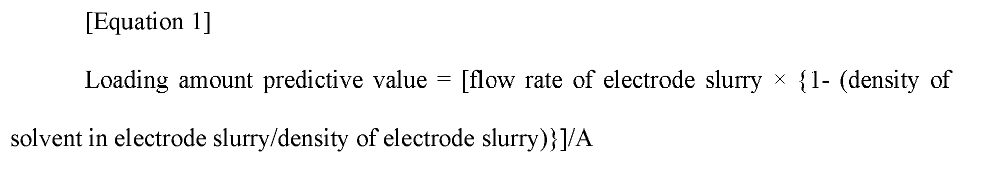 Loading amount predictive value = [flow rate of electrode slurry × {1- (density of solvent in electrode slurry/density of electrode slurry)}]/A [Equation 2] 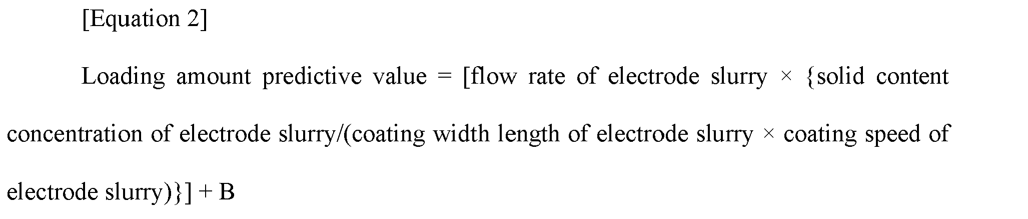 Loading amount predictive value = [flow rate of electrode slurry × {solid content concentration of electrode slurry/(coating width length of electrode slurry × coating speed of electrode slurry)}] + B

The electrode slurry coating system according to one embodiment, further including a loading amount measuring instrument for measuring a loading amount of the electrode slurry coated on the electrode, wherein the calculating unit, in a case in which a correction constant A is not determined, may be configured to calculate the correction constant A of the equation 1 from a loading amount measured value of the electrode slurry measured by the loading amount measuring instrument and the loading amount predictive value of the electrode slurry calculated by substituting into the equation 1.

In one embodiment, the control unit controls to adjust the RPM (Rotation per Minute) of the pump until the calculated loading amount predictive value of the electrode slurry satisfies the loading amount management range.

In one embodiment, the control unit controls to initiate or continue the electrode coating process when the calculated loading amount predictive value of the electrode slurry satisfies the loading amount management range.

The control unit controls to generate a warning sound when the calculated loading amount predictive value of the electrode slurry does not satisfy the loading amount management range.

The electrode slurry coating system according to one embodiment, further includes a Human-machine interface (HMI) for communication with the control unit.

According to another embodiment of the present invention, a coating method of an electrode slurry is provided. The coating method of the electrode slurry includes (a) a process of setting a coating process condition according to an electrode model; (b) a process of setting an RPM of a pump; (c) a process of test coating the electrode slurry on an electrode base substrate according to the set coating process condition; (d) a determining process of determining whether a loading amount predictive value of the electrode slurry satisfies a loading amount management range of the electrode slurry; and (e) if it is determined to be satisfactory in the determining process, initiating a coating process to coat the electrode slurry, wherein the (c) process of test coating the electrode slurry includes (c-1) measuring a flow rate of the electrode slurry and a density of the electrode slurry; and (c-2) calculating a loading amount predictive value of the electrode slurry based on a measurement information.

In one embodiment, the (c-1) process of measuring the flow rate of the electrode slurry and the density of the electrode slurry, wherein the flow rate of the electrode slurry and the density of the electrode slurry are measured by a mass flow meter installed on the path of the supply pipe.

In one embodiment, the (c-2) process of calculating the loading amount predictive value of the electrode slurry is calculated by substituting the flow rate value of the electrode slurry and the density value of the electrode slurry into the following equation 1 and/or equation 2 to calculate the loading amount predictive value of the electrode slurry. [Equation 1] 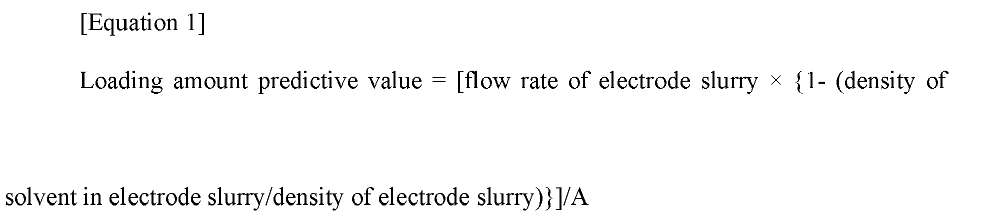 Loading amount predictive value = [flow rate of electrode slurry × {1- (density of solvent in electrode slurry/density of electrode slurry)}]/A [Equation 2] 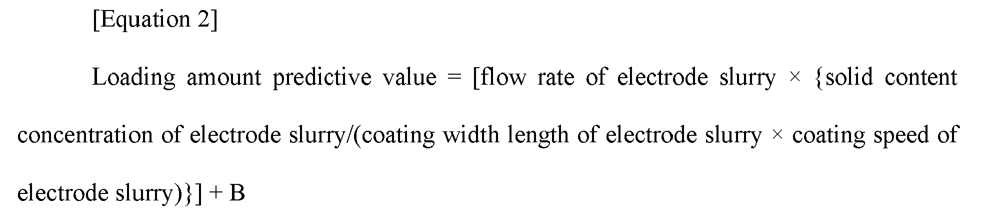 Loading amount predictive value = [flow rate of electrode slurry × {solid content concentration of electrode slurry/(coating width length of electrode slurry × coating speed of electrode slurry)}] + B

In one embodiment, when the (d) determining process is determined to be unsatisfactory, the process of (b) to (d) is repeated until the (d) determining process is determined to be satisfactory.

In one embodiment, in the (b) process of setting the RPM of the pump,
when a correction constant A of the equation 1 is determined, setting the RPM of the pump so that the loading amount predictive value of the electrode slurry in the equation 1 satisfies the loading amount target value of the electrode slurry,
when the correction constant A of the equation 1 is not determined, the process includes setting the RPM of the pump so that the calculated loading amount predictive value of the electrode slurry according to the equation 2 satisfies the loading amount target value of the electrode slurry.

The coating method of the electrode slurry according to one embodiment, further including (f) a loading amount measuring process of measuring the loading amount of the electrode slurry coated on the electrode base substrate.

The coating method of the electrode slurry according to one embodiment, further includes a process of calculating the correction constant A of the equation 1 such that the loading amount predictive value of the electrode slurry calculated by substituting the equation 1 is equal to the measured value of the loading amount of the electrode slurry, in a case in which the correction constant A of the equation 1 is not determined.

The coating method of the electrode slurry according to one embodiment, further includes a process of recalculating the correction constant A of the equation 1, in a case in which the correction constant A of the equation 1 is determined, in a case in which the difference between the calculated loading amount predictive value of the electrode slurry according to the equation 1 and the measured value of the measured electrode slurry loading amount in the (f) loading amount measurement process exceeds a reference range.

In one embodiment, the (e) coating process includes,
(e-1) a process of measuring the flow rate of the electrode slurry and the density of the electrode slurry;
(e-2) a process of calculating the loading amount predictive value of the electrode slurry based on the measurement information;
(e-3) a determining process for determining whether the loading amount predictive value of the electrode slurry satisfies the loading amount management range of the electrode slurry; and
(e-4) a process of readjusting the RPM of the pump in case in which it is determined to be unsatisfactory in the determining process.

In one embodiment, the coating process conditions include any one or two or more of a target value of the electrode slurry loading amount, a coating speed of the electrode slurry, a coating width length, and a solid content concentration of the electrode slurry.

### [Advantageous Effects]

The electrode slurry coating system and coating method according to the present invention, in managing the loading amount of the electrode slurry, is not based on the measured value of the loading amount after drying the electrode, but is based on the measurement information in the state of the electrode slurry, and thus can minimize the waste of the electrode material compared to the conventional art, in which the loading defect is determined only after drying.

The electrode slurry coating system and coating method according to the present invention, in managing the loading amount of the electrode slurry, is not based on a measured value of the loading amount of the electrode slurry, but calculates a loading amount predictive value of the electrode slurry from the flow rate of the electrode slurry and the density of the electrode slurry, which are easy to measure, thereby improving the convenience of managing the loading amount.

The electrode slurry coating system and coating method according to the present invention, in calculating the predictive value of the electrode slurry loading amount, is not based in principle on the solid content concentration of the electrode slurry, but is based on the flow rate of the electrode slurry and the density of the electrode slurry, and thus reliability can be improved.

The electrode slurry coating system and coating method according to the present invention include a control unit for controlling the RPM of the pump so that the loading amount predictive value of the electrode slurry, which is calculated based on measurement information measured in real time, satisfies a management range of the loading amount of the electrode slurry, thereby reducing the occurrence rate of loading defects.

### [Brief Description of the Drawings]

FIG. 1 is a block diagram of a coating system of an electrode slurry according to an exemplary embodiment of the present disclosure.
FIG. 2 is a schematic diagram of a coating system of an electrode slurry according to a first embodiment.
FIG. 3 is a schematic diagram of a coating system of an electrode slurry according to a second embodiment.
FIG. 4 is a flowchart to describe a coating method of an electrode slurry according to exemplary embodiments of the present disclosure.
FIG. 5 is a flowchart to describe a test coating process according to exemplary embodiments of the present disclosure.
FIG. 6 is a flowchart to describe a coating method of an electrode slurry according to exemplary embodiments of the present disclosure.
FIG. 7 is a diagram illustrating an HMI of an electrode slurry coating system according to a first embodiment.
FIG. 8 is a diagram illustrating an HMI of an electrode slurry coating system according to a second embodiment.

### [Description of Reference Numerals]

100,200: electrode slurry coating system
110: supply tank, first supply tank
210: second supply tank
120: coating die
130: supply pipe, first supply pipe
230: second supply pipe
140: pump, first pump
240: second pump
150: mass flow meter, first mass flow meter
250: second mass flow meter
160: control unit
170: HMI
180: valve, first valve
280: valve, second valve
182: return valve
190: return pipe, first return pipe

### [Detailed Description]

Hereinafter, the present disclosure will be described in detail with reference to the drawings. Prior to this, terms and words used in the present specification and claims should not be construed as limited to general or dictionary terms and should be interpreted with the meaning and concept in accordance with the technical idea of the present disclosure based on the principle that the inventors have appropriately defined the concepts of terms in order to explain the invention in the best way.

Accordingly, it is to be understood that the embodiments described herein, and the configurations illustrated in the drawings are only the most preferred embodiments of the present disclosure and are not intended to be representative of all of the technical ideas of the present disclosure, and that there may be various equivalents and modifications that may be substituted for them at the time of filing.

In addition, in describing the present disclosure, specific descriptions of related disclosed configurations or functions are omitted where it is considered that such detailed descriptions would obscure the subject matter of the present disclosure.

The present disclosure is shown in embodiment to more fully explain the present disclosure to those of ordinary skill in the art, and therefore, the shapes and sizes of the components in the drawings may be exaggerated, omitted, or shown schematically for clarity. Accordingly, the size or proportions of each component are not necessarily indicative of its actual size or proportions.

In the present disclosure, the term "loading amount of the electrode slurry" includes the overall concept of the weight of the electrode slurry coated on the current collector, which is the base substrate of the electrode, and the weight of the electrode slurry per unit area.

### Electrode slurry coating system

The present disclosure provides an electrode slurry coating system as a first embodiment.

### (first embodiment)

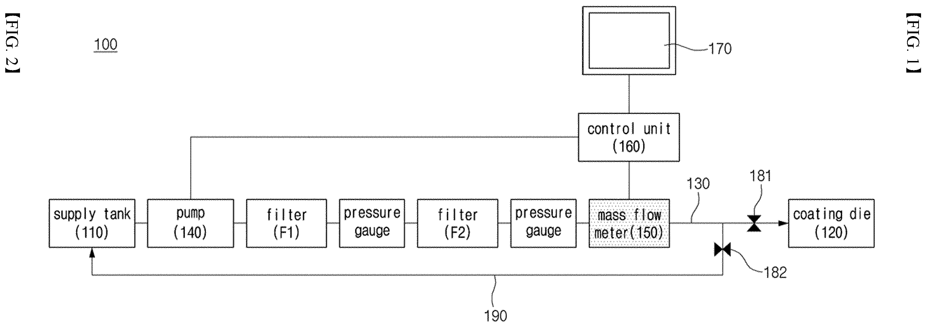

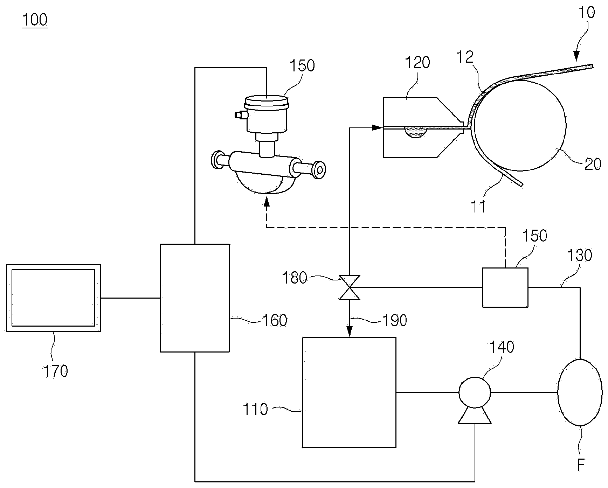

FIG. 1 is a block diagram of a coating system of an electrode slurry according to an exemplary embodiment of the present disclosure, and FIG. 2 is a schematic diagram of a coating system of an electrode slurry according to a first embodiment.

Referring to these drawings, an electrode slurry coating system 100 according to an exemplary embodiment of the present disclosure includes a supply tank 110, a coating die 120, a supply pipe 130, optionally a pump 140, a mass flow meter 150, a control unit 160, optionally a HMI 170, and optionally valves 181,182.

According to an exemplary embodiment of the present disclosure, the mass flow meter 150 is installed on a path of the supply pipe 130, a flow rate of an electrode slurry transferred in the supply pipe 130 and a density of the electrode slurry are measured by the mass flow meter 150, and the control unit 160 calculates a loading amount predictive value of the electrode slurry based on the measurement information measured by the mass flow meter 150, and controls the calculated loading amount predictive value of the electrode slurry to satisfy a preset loading amount management range. Thus, since the loading amount of the electrode slurry is managed through the loading amount predictive value of the electrode slurry in real time during the coating process of the electrode slurry, compared to the conventional art in which changes in the loading amount of the electrode slurry could be confirmed only after the drying process of the electrode, it is possible to reduce material loss and the occurrence rate of electrodes that are out of the management specifications of the loading amount.

Hereinafter, the electrode slurry coating system of the present disclosure will be described in detail.

The supply tank 110 may comprise an interior space in which the electrode slurry may be accommodated, for storing the electrode slurry including an electrode active material. The supply tank 110 may be configured to provide the electrode slurry to the coating die 120 through appropriate means. In some embodiments, a stirrer may be provided within the supply tank 110 for uniformly mixing the electrode slurry, and the electrode slurry coating system 100 may further include a driving device capable of driving the stirrer.

The electrode slurry may be a positive electrode slurry including a positive electrode active material, or it may be a negative electrode slurry including a negative electrode active material.

The coating die 120 may be configured to coat an electrode slurry transferred from the supply tank 110 on an electrode base substrate. The coating die 120 may be configured to coat the electrode slurry on the electrode base substrate at an appropriate width and thickness. The coating die 120 may have slots for discharging the electrode slurry at a predetermined width and thickness, and may have an internal structure that enables the electrode slurry to be discharged at an overall constant pressure.

The supply pipe 130 connects the supply tank 110 and the coating die 120, and becomes a path for transferring the electrode slurry from the supply tank 110 to the coating die 120.

A pump 140 may be provided on the supply pipe 130. Here, when it is stated that a specific element is provided 'on' a pipe, it means that the specific element is interposed in the middle of the extending pipe or the specific element is connected to the end of the pipe, and the same applies hereinafter unless otherwise specified.

The pump 140 may be configured to provide a driving force for transferring the electrode slurry to the coating die 120. By applying a predetermined range of pressure to the electrode slurry stored within the supply tank 110, the pump 140 provides a driving force to cause the electrode slurry to be transferred through the supply pipe 130 to the coating die 120. In some embodiments, the pump 140 may be a forced delivery pump for transferring the electrode slurry. In some embodiments, the pump 140 may be a pump of a type that transfers the electrode slurry by providing centrifugal force to the electrode slurry. However, the present disclosure is not limited thereto.

One or two or more filters F may be provided on the path of the supply pipe 130. In some embodiments, a first filter of a magnetic type may be provided on the supply pipe 130. The first filter may be provided for the removal of specific magnetic impurities in the electrode slurry.

In some embodiments, a second filter may be provided on the supply pipe 130. The second filter may include a filtration membrane for filtering foreign material in the electrode slurry.

A return pipe 190 may be provided on the path of the supply pipe 130. The return pipe 190 is configured to branch from the supply pipe 130 and return to the supply tank 110 to return a portion of the electrode slurry to the supply tank 110 during Line Stop. In some embodiments, the return pipe 190 may branch from the supply pipe 130 through a tee pipe.

The supply pipe 130 may include one or two or more valves 181, 182 for controlling the flow path of the electrode slurry. Specifically, the valves may include a supply valve 181 for controlling the transfer of electrode slurry to the coating die 120 and a return valve 182 for controlling the return of electrode slurry to the supply tank 110.

In some embodiments, the supply valve 181 and return valve 182 may each be an on-off valve configured to be opened and closed by electrical signals, hydraulic pressure, or pneumatic pressure. In some embodiments, the supply valve 181 and return valve 182 may each be a control valve whose degree of opening can be precisely controlled by electrical signals, hydraulic pressure, or pneumatic pressure.

The supply valve 181 may be provided between the branching point where the return pipe 190 branches from the supply pipe 130 and the coating die 120. The return valve 182 may be provided between the branching point where the return pipe 190 branches from the supply pipe 130 and the supply tank 110.

The flow path and/or flow rate of the electrode slurry can be controlled by adjusting the respective opening and closing of the supply valve 181 and the return valve 182. In some embodiments, when the return valve 182 is closed and the supply valve 181 is opened, the electrode slurry can be entirely supplied to the coating die 120 without being returned to the supply tank 110. In other embodiments, when the supply valve 181 is closed and the return valve 182 is opened, the electrode slurry can be entirely returned to the supply tank 110 without being supplied to the coating die 120.

One or two or more pressure gauges may be provided on the supply pipe 130. The pressure gauge may be provided at any position on the supply pipe 130 where pressure measurement is needed. The pressure gauge may be configured to generate electrical signals in response to the transfer pressure of the electrode slurry, or may be configured to generate pneumatic signals.

In some embodiments, the pressure gauge may be provided between the pump 140 and the coating die 120. In some embodiments, the pressure gauge may be provided between the pump 140 and the mass flow meter 150. In some embodiments, the pressure gauges may be provided between the first filter and the second filter, and between the second filter and the mass flow meter 150, respectively.

The mass flow meter 150 is installed on the path of the supply pipe 130, and is configured to measure the flow rate of the electrode slurry transferred through the supply pipe and the density of the electrode slurry. In some embodiments, the mass flow meter 150 may be configured to measure the flow rate of the electrode slurry flowing during a unit time, from which the density of the electrode slurry is calculated. In some embodiments, the mass flow meter 150 may comprise a temperature sensor to correct for temperature influences, considering that each measured value of the flow rate of the electrode slurry and the density of the electrode slurry is influenced by temperature. In some embodiments, the mass flow meter 150 may be a Coriolis mass flow meter configured to directly measure the flow rate, density and temperature of the electrode slurry.

Based on the measurement information measured by the mass flow meter 150, the control unit 160 calculates a loading amount predictive value of the electrode slurry, and controls the calculated loading amount predictive value of the electrode slurry to satisfy a loading amount management range.

In some embodiments, the control unit 160 may include a calculating unit to calculate the loading amount predictive value of the electrode slurry, and the calculating unit may substitute the flow rate value of the electrode slurry and the density value of the electrode slurry measured by the mass flow meter 150 into the following equation 1 and/or equation 2 to calculate the loading amount predictive value of the electrode slurry. [Equation 1] 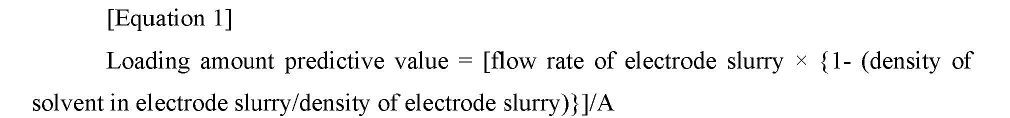 Loading amount predictive value = [flow rate of electrode slurry × {1- (density of solvent in electrode slurry/density of electrode slurry)}]/A [Equation 2] 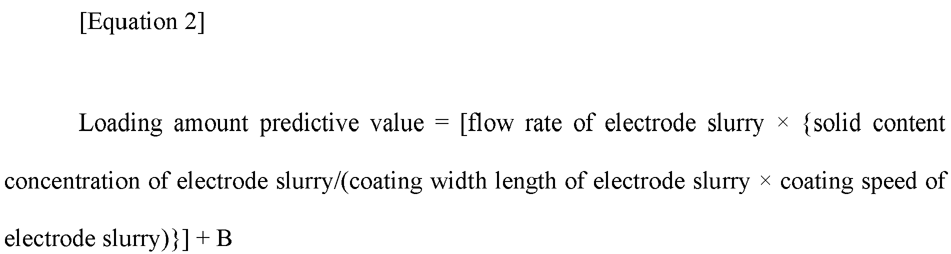 Loading amount predictive value = [flow rate of electrode slurry × {solid content concentration of electrode slurry/(coating width length of electrode slurry × coating speed of electrode slurry)}] + B

Here, the correction constant A and correction constant B are correction constants for reflecting errors in measured values and errors due to coating equipment, etc. respectively. The loading amount predictive value calculated according to Equation 1 or Equation 2 is based on any one or more of the respective measured values of flow rate, density, and solid content concentration, and these measured values may vary depending on the measuring environment and measuring conditions. In addition, even when the measured values are the same, the predicted values may vary depending on the coating equipment. The correction constant A and the correction constant B may reflect such measurement errors and coating equipment errors, thereby improving the accuracy of the loading amount predictive value.

Further, such correction constant A and correction constant B may be calculated from a measured value of the loading amount and a predictive value of the loading amount, and after the correction constant A and correction constant B are determined, the loading amount may be predicted according to the equation 1 and/or equation 2 without measuring the loading amount.

Since the electrode slurry coating system 100 according to the present disclosure can manage the loading amount of the electrode slurry based on the calculated loading amount predictive value of the electrode slurry according to the above equation 1 and/or equation 2, it has the advantage of being convenient because it is not necessary to measure the loading amount of the electrode slurry in the electrode slurry state. In addition, the error caused by the coating equipment can be corrected by the correction constant A and/or the correction constant B, thereby improving the reliability.

When the correction constant A is already known, or when the correction constant A is determined, the loading amount predictive value of the electrode slurry may be calculated according to the equation 1. In the equation 1, the flow rate of the electrode slurry and the density of the electrode slurry are each substituted with a measured value by the mass flow meter 150. In addition, in the equation 1, the density of the solvent of the electrode slurry is substituted with a value of the density of the solvent, such as NMP, water, etc. In the equation 1, A is a correction constant to correct the error caused by the coating equipment.

When the correction constant A is unknown, or when the correction constant A is not determined, the loading amount predictive value of the electrode slurry may be calculated according to the equation 2. In the equation 2, the solid content concentration of the electrode slurry, the coating width length of the electrode slurry, and the coating speed of the electrode slurry are substituted with preset values according to the electrode model. In addition, in the equation 2, the flow rate of the electrode slurry is substituted with a value measured by the mass flow meter. In addition, in the equation 2, B is a correction constant to correct the error caused by the coating equipment.

In the equation 2, since the solid content concentration of the electrode slurry changes due to the temporal variation of the electrode slurry, the measured value of the solid content concentration occurs with an error. In other words, the loading amount predictive value of the electrode slurry according to the equation 2 may have a possibility of occurring an error caused by the actual measurement error of the solid content concentration of the electrode slurry, and thus, in predicting the loading amount of the electrode slurry, the equation 1 can improve reliability compared to the equation 2.

Accordingly, the electrode slurry coating system 100 according to the present disclosure, in calculating the loading amount predictive value of the electrode slurry, calculates it basically according to equation 1, but in cases in which the correction constant A of equation 1 is unknown or undetermined, the loading amount predictive value of the electrode slurry can be calculated auxiliary according to equation 2.

The electrode slurry coating system 100 may further include a loading amount measuring instrument (not shown) to derive the correction constant A when the loading amount predictive value of the electrode slurry cannot be calculated according to the equation 1. In addition, even when the loading amount predictive value of the electrode slurry can be calculated according to the equation 1, the loading amount measuring instrument may be needed to recalculate the correction constant A for reasons such as the measurement tolerance of the mass flow meter due to the temporal variation of the coating process.

In some embodiments, the control unit 160 controls to perform a test coating process prior to fully initiating the coating process of the electrode, and in the test coating process, the correction constant A can be derived.

The loading amount measuring instrument is not limited in types as long as it is a means capable of measuring the loading amount of electrode slurry coated on the electrode base substrate. In some embodiments, the loading amount measuring instrument may be a web-gauge.

Theoretically, the loading amount predictive value of the electrode slurry should match the loading amount measured value of the electrode slurry, so that from the loading amount measured value of the electrode slurry measured by the loading amount measuring instrument and the loading amount predictive value of the electrode slurry calculated by substituting into the equation 1 or equation 2, the correction constant A of the equation 1 or the correction constant B of the equation 2 can be calculated.

The control unit 160 can control to adjust the RPM (Rotation per Minute) of the pump until the calculated loading amount predictive value of the electrode slurry according to the equation 1 and/or the equation 2 satisfies the management range of the loading amount. Specifically, the control unit 160 can control to increase the RPM of the pump to increase the loading amount in the case in which the loading amount predictive value is less than the management range of the loading amount, and conversely, can control to decrease the RPM of the pump to decrease the loading amount in the case in which the loading amount predictive value is greater than the management range of the loading amount.

In some embodiments, the control unit 160 can control to initiate the electrode coating process in the case in which the calculated loading amount predictive value of the electrode slurry satisfies the management range of the loading amount, as described above.

In some embodiments, the control unit 160 may be configured to calculate a loading amount predictive value of the electrode slurry, based on the flow rate of the electrode slurry and the density of the electrode slurry measured in real time, even after the electrode coating process is initiated, and to determine whether the calculated loading amount predictive value of the electrode slurry satisfies a management range of the loading amount of the electrode slurry, and may control the RPM of the pump when the management range of the loading amount is not satisfied.

In some embodiments, the control unit 160 may control to generate a warning sound in the case in which the calculated loading amount predictive value of the electrode slurry does not satisfy the management range of the loading amount.

As a non-limiting example, the control unit 160 may be a programmable logic controller (PLC). A PLC is a specialized form of microprocessor-based controller that uses programmable memory to store instructions and implement functions such as logic, sequencing, timing, counting, and arithmetic to control machines and processes. The PLC is easy of operation and programming.

In some embodiments, the control unit 160 may include a CPU, an input interface, an output interface, a communication interface, and memory devices.

The memory devices may include a Read Only Memory (ROM) configured to store system programs, such as an operating system, and a Random Access Memory (RAM) configured to store user programs and data, such as status information of input and output devices, timers, counters, and values of other internal devices.

The CPU may be configured to control communication between modules implementing logic and converting input signals into output operation signals. The CPU may operate based on system programs and user programs stored in memory devices. The CPU may be configured to write or read measurement data in the data area of the memory devices based on system programs and user programs.

The coating process conditions or data for respective electrode models may be transmitted to the CPU via the input interface. The results processed by the CPU may be output via the output interface.

In some embodiments, the electrode slurry coating system 100 may further include a human-machine interface (HMI) for communication with the control unit 160. Through the HMI, an operator can input the electrode model to be coated, and through the HMI, the control unit can output: preset electrode coating process conditions for the input electrode model (target value of loading amount, coating speed, coating width length, solid content concentration), real-time measured flow rate values and density values of the electrode slurry, predictive values of the electrode slurry loading amount, temperature measurement values of the electrode slurry, and determination information indicating whether the predictive values of the electrode slurry loading amount conform to the management range of loading amount.

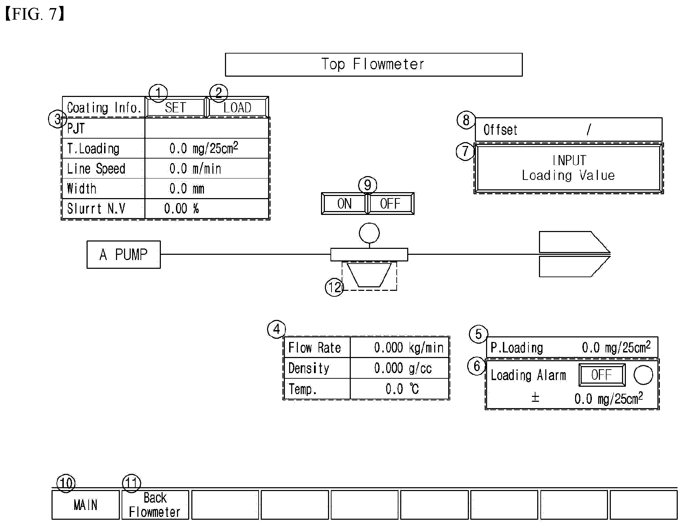

FIG. 7 is a diagram illustrating an HMI of an electrode slurry coating system according to a first embodiment.

Referring to FIG. 7, by touching the "SET" tab of ①, you can move to the HMI where the coating process condition data is output. By touching the "LOAD" tab of ②, the coating process condition data can be loaded and input. Then, the selected coating process conditions (model name, target value of loading amount, coating speed, coating width length, and solid content concentration of the electrode slurry) can be output via the HMI as shown in ③. Then, the flow rate measured value of the electrode slurry measured by the mass flow meter 150, the density measured value of the electrode slurry measured by the mass flow meter 150, and the temperature measured value may be output via the HMI as shown in ④, and the calculated loading amount predictive value of the electrode slurry based on the measurement information of the mass flow meter 150 may be output via the HMI as shown in ⑤.

Further, by comparing the loading amount predictive value of the electrode slurry and the loading amount management range of the electrode slurry, an alarm may be set as in ⑥ to warn when the loading amount predictive value of the electrode slurry is out of the loading amount management range. In an exemplary embodiment, the loading amount management range may be categorized into a first management range, which is a desirable management range, and a second management range, which is a criterion for good and defective products. Then, if the loading amount predictive value is within the first management range, the loading amount predictive value may be output in green color; if the loading amount predictive value is out of the first management range, but not out of the second management range, the loading amount predictive value may be output in yellow color; and if the loading amount predictive value is out of the second management range, the loading amount predictive value may be output in red color.

In the case in which the electrode slurry coating system 100 includes a loading amount measuring instrument (not shown), the measured value by the loading amount measuring instrument may be input by touching the tab of ⑦.

Further, if the correction constant A of the equation 1 is determined and the loading amount predictive value of the electrode slurry is calculated according to the equation 1, the "Offset" of ⑧ can be output as "Active" meaning that the correction constant A is determined. However, in the case in which the correction constant A of the equation 1 is not determined and the loading amount predictive value of the electrode slurry cannot be calculated according to the equation 1, and the loading amount predictive value of the electrode slurry is calculated according to the equation 2, it may be output as "Inactive" for "Offset" of ⑧.

### (second embodiment)

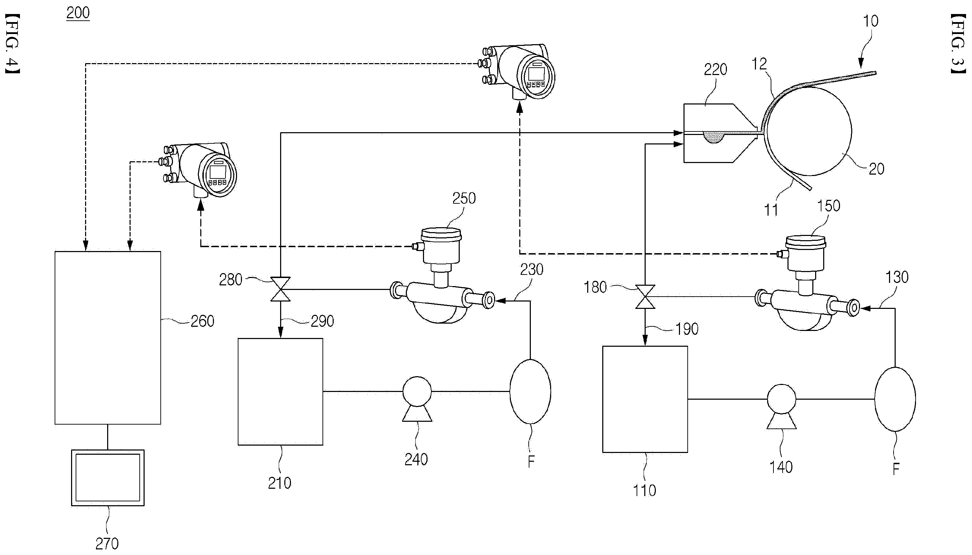

FIG. 3 is a schematic diagram of a coating system of an electrode slurry according to a second embodiment. Referring to FIG. 3, the electrode slurry coating system 200 according to a second embodiment may be a coating system of electrode slurry for manufacturing a plurality of layers of electrodes, wherein the coating die 120 has two or more slots from which the electrode slurry is discharged.

Accordingly, the coating die 120 may be configured to have two or more slots, and as a non-limiting example, the coating die 120 may be configured to discharge a first electrode slurry from one slot and a second electrode slurry from the other slot. In this case, the first electrode slurry and the second electrode slurry may have the same composition, or the composition may be different.

The electrode slurry coating system 200, for coating the first and second electrode slurries, including: a first supply tank 110 for storing the first slurry and a second supply tank 210 for storing the second electrode slurry; a coating die 120 for coating the first and second electrode slurries on an electrode base substrate; a first supply pipe 130 for being a transfer path for the first electrode slurry from the first supply tank 110 to the coating die 120, and a second supply pipe 230 for being a transfer path for the second electrode slurry from the second supply tank 210 to the coating die 120; a first pump 140 configured to provide a driving force for transferring the first electrode slurry to the coating die 120, and a second pump 240 configured to provide a driving force for transferring the second electrode slurry to the coating die 120; a first mass flow meter 150, installed on the path of the first supply pipe 130, for measuring the flow rate of the first electrode slurry transferred through the first supply pipe 130 and the density of the first electrode slurry; and a second mass flow meter 250, installed on the path of the second supply pipe 230, for measuring the flow rate of the second electrode slurry transferred through the second supply pipe 230 and the density of the second electrode slurry; a control unit 160 for calculating a loading amount predictive value of the first and second electrode slurry based on the respective measurement information measured by the first and second mass flow meters 150,250, and controlling the calculated loading amount predictive value of the electrode slurry to satisfy a high loading amount management range.

Further, the first and second supply pipes 130,230 may include one or two or more valves 180,280 to control the flow path of the first and second electrode slurry.

In addition, on the path of the first and second supply pipes 130,230, respectively, first and second return pipes 190,290 may be provided.

The electrode slurry coating system 200 according to the second embodiment differs only in that, compared to the electrode slurry coating system 100 according to the first embodiment, a second supply tank 210, a second supply pipe 230, a second pump 240 and a second valve 280 for supplying and transferring the second electrode slurry, a second mass flow meter 250 for measuring the flow rate and density of the second electrode slurry, and a second return pipe 290 for returning the second electrode slurry are further added. These configurations have been described in detail above, and thus redundant description will be omitted.

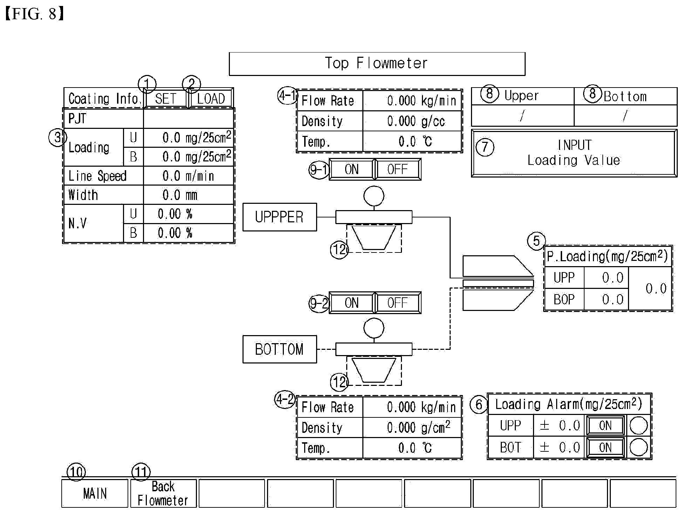

FIG. 8 is a diagram illustrating an HMI of an electrode slurry coating system according to a second embodiment.

Referring to FIG. 8, the HMI of the electrode slurry coating system according to the second embodiment differs from the electrode slurry coating system according to the first embodiment only in that it is configured to output information of the upper and lower layers of the electrode slurry, respectively.

Specifically, the coating process conditions (model name, target value of the loading amount, coating speed, coating width length, and solid content concentration of the electrode slurry) may be output via the HMI as shown in ③ for each of the upper and lower layers, and the respective measurement information of the upper and lower layers measured by the mass flow meters 150,250 (flow rate of the electrode slurry, density of the electrode slurry, and temperature of the electrode slurry) may be output via the HMI as shown in ④ for each of the upper and lower layers, and the calculated loading amount predictive value of the electrode slurry based on the measurement information of the mass flow meter may be output via the HMI as shown in ⑤ for each of the upper and lower layers. Further, by comparing the loading amount predictive value of the electrode slurry with a loading amount management range of the electrode slurry, the loading amount predictive value of the electrode slurry may be output as in ⑥ for each of the upper and lower layers to warn when the loading amount predictive value of the electrode slurry is out of the loading amount management range.

### Coating method of electrode slurry

The present disclosure provides a coating method of an electrode slurry as a second embodiment.

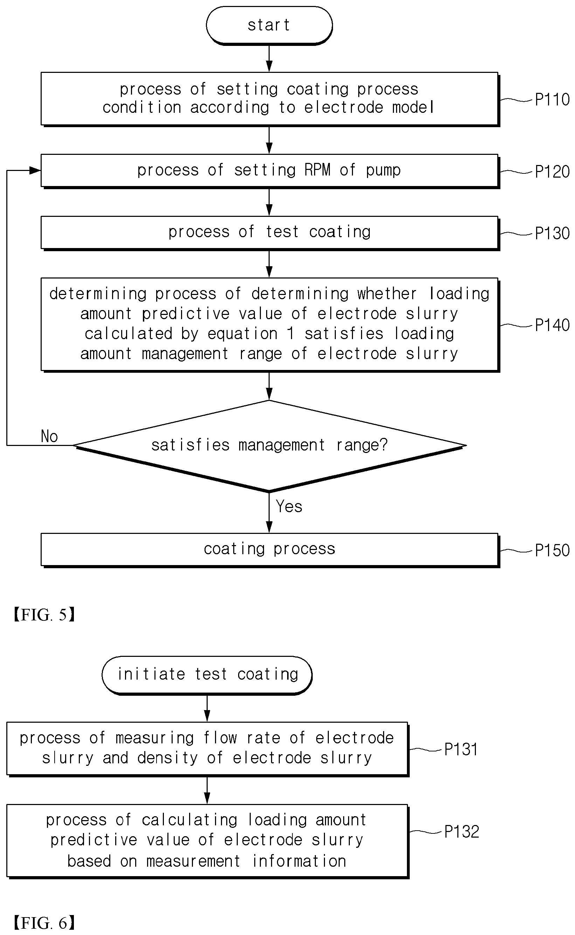

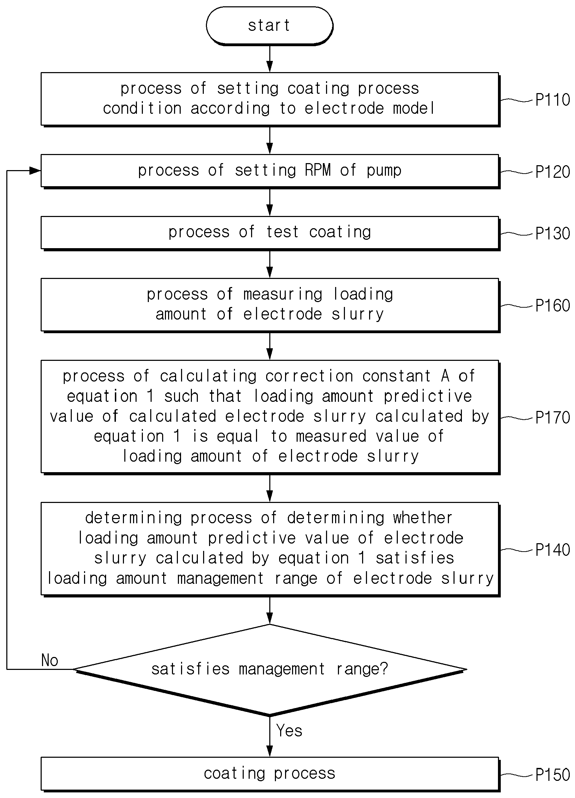

FIG. 4 is a flowchart to describe a coating method of an electrode slurry according to exemplary embodiments of the present disclosure, and FIG. 5 is a flowchart to describe a test coating process according to exemplary embodiments of the present disclosure.

Referring to FIG. 4, a coating method of an electrode slurry according to one embodiment of the present disclosure may include (a) a process of setting a coating process condition according to an electrode model (P110); (b) a process of setting an RPM of a pump (P120); (c) a process of test coating the electrode slurry (P130); (d) a determining process of determining whether a loading amount predictive value of the electrode slurry satisfies a loading amount management range of the electrode slurry (P140); and (e) a coating process (P150). Further, referring to FIG. 5, the (c) process of test coating the electrode slurry may include (c-1) measuring a flow rate of the electrode slurry and a density of the electrode slurry (P131); and (c-2) calculating a loading amount predictive value of the electrode slurry based on the measurement information (P132).

According to the coating method of the electrode slurry according to one embodiment of the present disclosure, the loading amount predictive value of the electrode slurry is calculated based on the measured flow rate value of the electrode slurry and the density value of the electrode slurry in the test coating process (P130), and the coating process (P150) is initiated only when the calculated loading amount predictive value of the electrode slurry satisfies the management range of the loading amount, so that the loss of material can be minimized compared to the conventional art described above. In addition, during the coating process (P150), the loading amount of the electrode slurry can be managed in real time by measuring the flow rate of the electrode slurry and the density of the electrode slurry with high measurement accuracy, thereby improving the reliability and convenience of the loading management.

The electrode slurry coating method according to some embodiments may be coating an electrode slurry using the electrode slurry coating system 100 described above.

In some embodiments, the (a) process of setting the coating process conditions according to the electrode model (P110) may include inputting a model of the electrode to be coated, and retrieving the preset coating process conditions according to the model of the electrode. In some embodiments, the coating process conditions may be any one or two or more of a loading amount target value, a coating speed (m/s) of the electrode slurry, a coating width length, and a solid content concentration of the electrode slurry.

In some embodiments, the (b) process of setting the RPM of the pump (P120) may be a process of presetting the RPM of the pump in a circulating state of the electrode slurry, prior to initiation of the test coating and/or coating process. Here, the circulating state of the electrode slurry may be a state in which the electrode slurry is transferred from the supply tank to the coating die via the supply pipe, before the electrode slurry is discharged from the coating die. Alternatively, it may be a state in which the electrode slurry is transferred from the supply tank to the coating die via the supply pipe, and is returned to the supply tank via the return pipe.

In some embodiments, the (b) process of setting the RPM of the pump (P120) may be a process of setting the RPM of the pump so that the loading amount predictive value of the electrode slurry becomes the loading amount target value set in the (a) process. Here, the target value of the loading amount may be a set loading amount of the corresponding electrode model, and is distinct from the loading amount management range. While the former is a specific value, the latter may be a range of loading amount values that serve as criteria for good and defective products.

In some embodiments, when an electrode model is input through the HMI, the control unit 160 may output a coating process condition through the HMI that includes a loading amount target value for the electrode model input through the HMI. In addition, the control unit 160 may calculate the loading amount predictive value according to the equation 1 and/or equation 2 below, automatically calculate the RPM of the pump so that the calculated loading amount predictive value is the loading amount target value, and output the automatically calculated RPM of the pump through the HMI. [Equation 1] 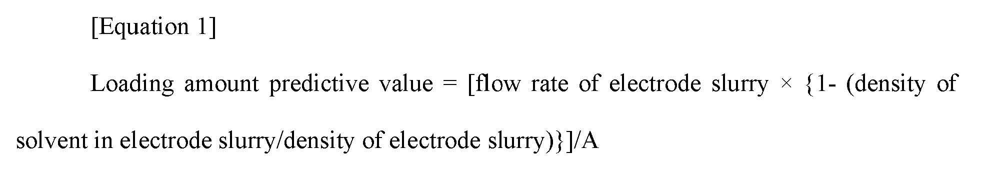 Loading amount predictive value = [flow rate of electrode slurry × {1- (density of solvent in electrode slurry/density of electrode slurry)}]/A [Equation 2] 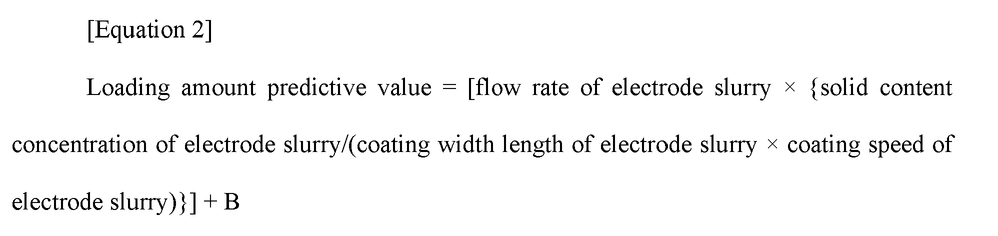 Loading amount predictive value = [flow rate of electrode slurry × {solid content concentration of electrode slurry/(coating width length of electrode slurry × coating speed of electrode slurry)}] + B

In the case in which the correction constant A is determined, the loading amount predictive value may be calculated according to equation 1, and in the case in which the correction constant A is not determined, the loading amount predictive value may be calculated according to equation 2.

The (c) process of test coating the electrode slurry (P130) is a step for readjusting the RPM of the motor to satisfy the target value of the loading amount of the electrode slurry, and for fine adjusting the coating width length of the electrode slurry, etc., while coating the electrode slurry according to the coating process conditions set above, in an environment in which the electrode slurry is actually coated rather than in a slurry circulation state before coating.

The (c) process of test coating the electrode slurry (P130) may include (c-1) measuring a flow rate of the electrode slurry and a density of the electrode slurry (P131); and (c-2) calculating a loading amount predictive value of the electrode slurry based on the measuring information (P132 in order to readjust the RPM of the motor so that the loading amount predictive value of the electrode slurry satisfies the loading amount target value of the electrode slurry. Since the loading amount predictive value of the electrode slurry may change slightly as a step is changed from a slurry circulation state before coating to a coating process state, in the process (c) of test coating the electrode slurry (P130), the flow rate of the electrode slurry and the electrode slurry are measured in real time, and the electrode slurry loading amount predictive value is calculated based on the measured value of the flow rate of the electrode slurry and the measured value of the density of the electrode slurry.

The (c-1) process of measuring the flow rate of the electrode slurry and the density of the electrode slurry may be that the flow rate of the electrode slurry and the density of the electrode slurry are measured by the mass flow meter 150 installed on the path of the supply pipe 130. Since the mass flow meter 150 has been described in detail above, a redundant description will be omitted.

The (c-2) process of calculating the loading amount predictive value of the electrode slurry may be to substitute the flow rate value of the electrode slurry and the density value of the electrode slurry into the equation 1 and/or equation 2 to calculate the loading amount predictive value of the electrode slurry.

In the case in which the correction constant A is determined, the loading amount predictive value may be calculated according to the equation 1, and in the case in which the correction constant A is not determined, the loading amount predictive value may be calculated according to the equation 2.

In some embodiments, in calculating the loading amount of the electrode slurry according to the equation 1, the flow rate value of the electrode slurry and the density value of the electrode slurry substituted into the equation 1 may be an average value of the flow rate of the electrode slurry and an average value of the density of the electrode slurry measured 6 to 10 seconds before ending the (c) process of test coating the electrode slurry.

The (c) process of test coating the electrode slurry is ended by closing the supply pipe 130 by operation of the valve 181, and then performing the (d) determining process.

The (d) determining process is a process of determining whether the loading amount predictive value of the electrode slurry satisfies the loading amount management range of the electrode slurry.

When it is determined to be satisfactory in the (d) determining process (P140), the (e) coating process (P150) may be initiated. However, when it is determined to be unsatisfactory in the (d) determining process (P140), until it is determined to be satisfactory in the determining process (P140), the (b) process of setting the RPM of the pump (P120) to (d) determining process (P140) is repeated. Then, only when it is determined to be satisfactory in the (d) determining process (P140), the (e) coating process (P150) is initiated.

The (e) coating process (P150), including: (e-1) a process for measuring a flow rate of the electrode slurry and a density of the electrode slurry (P151); (e-2) a process for calculating a loading amount predictive value of the electrode slurry based on the measurement information (P152); (e-3) a determining process (P153) for determining whether the loading amount predictive value of the electrode slurry satisfies a loading amount management range of the electrode slurry; and (e-4) a process (P154) for readjusting the RPM of the pump in case it is determined to be unsatisfactory in the determining process. Accordingly, the loading amount of the electrode slurry may be appropriately managed in real time during the coating process.

Hereinafter, with reference to FIG. 4, a coating method of the electrode slurry according to the present disclosure will be described in detail when the correction factor A is determined.

When the correction constant A is determined, a predictive value of the loading amount of the electrode slurry is calculated according to equation 1. Specifically, (b) in the process of setting the RPM of the pump (P120), the RPM of the pump may be preset so that the loading amount predictive value of the electrode slurry calculated according to the equation 1 satisfies the loading amount target value. In the (c) process of test coating the electrode slurry (P130), the loading amount predictive value of the electrode slurry may be calculated according to the equation 1. Then, if it is determined to be unsatisfactory in the (d) determining process, the (b) process of setting the RPM of the pump (P120) may be returned to, and the RPM of the pump may be readjusted so that the calculated loading amount predictive value of the electrode slurry according to the equation 1 can satisfy the loading amount target value.

In some embodiments, the coating method of the electrode slurry may further include (f) a loading amount measuring process, wherein the loading amount of the electrode slurry coated on the electrode base substrate is measured. Ideally, the loading amount predictive value of the electrode slurry is the same as the loading amount measured value of the electrode slurry. As will be described later, in initially determining the correction constant A of the equation 1, the correction constant A is determined so that the loading amount predictive value and the loading amount measured value according to the equation 1 are the same; however, due to reasons such as the measurement tolerance of the mass flow meter due to the temporal variation of the coating process, the difference between the loading amount predictive value and the loading amount measured value according to the equation 1 may gradually be greater. Therefore, when the difference between the loading amount predictive value of the electrode slurry calculated according to the equation 1 and the measured value of the loading amount of the measured electrode slurry in the (f) loading amount measuring process exceeds a reference range, it is preferable to include a process of recalculating the correction constant A of the equation 1.

In some embodiments, the (f) loading amount measuring process may be performed after the (c) test coating process (P130). In addition, in some embodiments, the (f) loading amount measuring process may also be performed in the middle of the (e) coating process.

Hereinafter, with reference to FIG. 6, a coating method of the electrode slurry according to the present disclosure will be described in detail when the correction constant A is not determined.

In the case in which the correction constant A is not determined, the loading amount predictive value of the electrode slurry according to the equation 1 cannot be calculated directly, so that the (b) process of setting the RPM of the pump may include the process of setting the RPM of the pump so that the calculated loading amount predictive value of the electrode slurry according to the equation 2 satisfies the loading amount target value of the electrode slurry. Further, it may include a process (P160) of measuring the loading amount of the electrode slurry to calculate the correction constant A of the equation 1; and a process (P170) of calculating the correction constant A of the equation 1 such that the loading amount predictive value of the electrode slurry calculated by substituting the equation 1 is equal to the measured value of the loading amount of the electrode slurry.

When the correction constant A is derived accordingly, it is then possible to calculate a predictive value of the loading amount of the electrode slurry according to the equation 1.

Since the remaining processes (P110 to P160) except the process (P170) of calculating the correction constant A of the equation 1 have been described in detail above, a redundant description will be omitted.

The electrode slurry coating system 100,200 and the coating method of the electrode slurry according to the present disclosure have the effect that the loading amount of the electrode slurry can be managed by measuring the flow rate of the electrode slurry and the density of the electrode slurry with high measurement accuracy, thereby improving the reliability and convenience of the loading amount management.

As aforementioned, the present disclosure has been described in more detail through the drawings and embodiments.

## Claims

1. An electrode slurry coating system (100, 200) for coating an electrode slurry on an electrode base substrate,
the electrode slurry coating system (100, 200), comprising:
a supply pipe (130) connecting a supply tank (110) for storing an electrode slurry and a coating die (120) for coating the electrode slurry on an electrode base substrate, wherein the supply pipe (130) being a transfer path for the electrode slurry from the supply tank (110) to the coating die (120);
**characterized in that** the electrode slurry coating system (100, 200) further comprises:
a mass flow meter (150) installed on the path of the supply pipe (130), for measuring a flow rate of the electrode slurry transferred through the supply pipe (130) and a density of the electrode slurry; and
a control unit (160) for calculating a loading amount predictive value of the electrode slurry based on a measurement information measured by the mass flow meter (150), and for controlling the calculated loading amount predictive value of the electrode slurry to satisfy a loading amount management range.

2. The electrode slurry coating system (100, 200) of claim 1, further comprises a pump (140) configured to provide a driving force for transferring the electrode slurry to the coating die (120).

3. The electrode slurry coating system (100, 200) of claim 1, wherein the control unit (160) comprises a calculating unit that calculate the loading amount predictive value of the electrode slurry by substituting the flow rate value of the electrode slurry and the density value of the electrode slurry measured by the mass flow meter (150) into the following equation 1 and/or equation 2. [Equation 1] 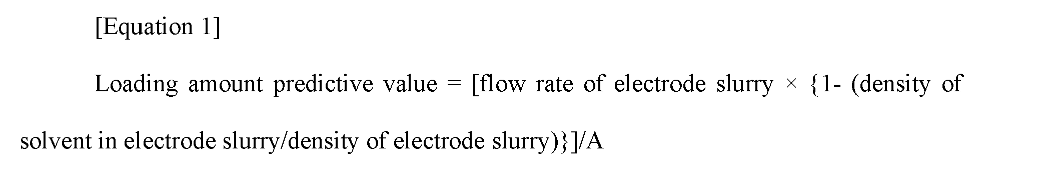 Loading amount predictive value = [flow rate of electrode slurry × {1- (density of solvent in electrode slurry/density of electrode slurry)}]/A [Equation 2] 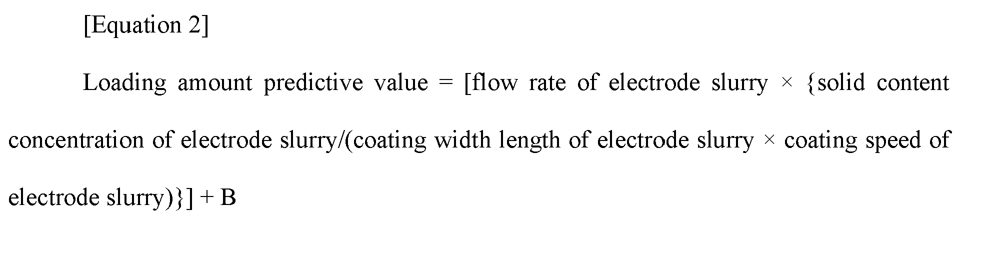 Loading amount predictive value = [flow rate of electrode slurry × {solid content concentration of electrode slurry/(coating width length of electrode slurry × coating speed of electrode slurry)}] + B

4. The electrode slurry coating system (100, 200) of claim 3, further comprises a loading amount measuring instrument for measuring a loading amount of the electrode slurry coated on the electrode,
wherein the calculating unit, in a case in which a correction constant A is not determined, is configured to calculate the correction constant A of the equation 1 from a loading amount measured value of the electrode slurry measured by the loading amount measuring instrument and the loading amount predictive value of the electrode slurry calculated by substituting into the equation 1.

5. The electrode slurry coating system (100, 200) of claim 2, wherein the control unit (160) controls to adjust the Rotation per Minute (RPM) of the pump (140) until the calculated loading amount predictive value of the electrode slurry satisfies the loading amount management range.

6. The electrode slurry coating system (100, 200) of claim 1, wherein the control unit (160) controls to initiate or continue the electrode coating process when the calculated loading amount predictive value of the electrode slurry satisfies the loading amount management range.

7. The electrode slurry coating system (100, 200) of claim 1, wherein the control unit (160) controls to generate a warning sound when the calculated loading amount predictive value of the electrode slurry does not satisfy the loading amount management range.

8. The electrode slurry coating system (100, 200) of claim 1, further comprises a Human-machine interface (HMI) (170) for communication with the control unit (160).

9. A coating method of the electrode slurry, **characterized in that** the method comprises:
(a) a process of setting a coating process condition according to an electrode model;
(b) a process of setting an RPM of a pump (140);
(c) a process of test coating the electrode slurry on an electrode base substrate according to the set coating process condition;
(d) a determining process of determining whether a loading amount predictive value of the electrode slurry satisfies a loading amount management range of the electrode slurry; and
(e) if it is determined to be satisfactory in the determining process, initiating a coating process to coat the electrode slurry,
wherein the (c) process of test coating the electrode slurry comprises:
(c-1) measuring a flow rate of the electrode slurry and a density of the electrode slurry; and
(c-2) calculating a loading amount predictive value of the electrode slurry based on a measurement information.

10. The coating method of the electrode slurry of claim 9, wherein the (c-1) process of measuring the flow rate of the electrode slurry and the density of the electrode slurry, wherein the flow rate of the electrode slurry and the density of the electrode slurry are measured by a mass flow meter (150) installed on the path of the supply pipe (130).

11. The coating method of the electrode slurry of claim 9, wherein the (c-2) process of calculating the loading amount predictive value of the electrode slurry is calculated by substituting the flow rate value of the electrode slurry and the density value of the electrode slurry into the following equation 1 and/or equation 2 to calculate the loading amount predictive value of the electrode slurry. [Equation 1] 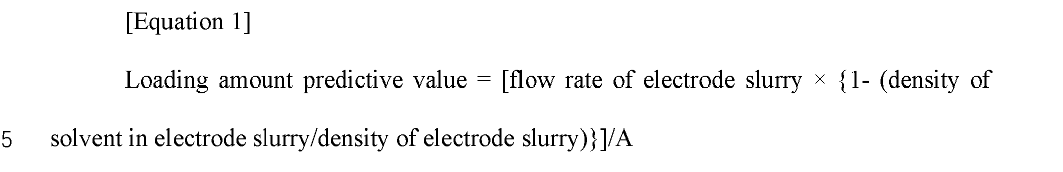 Loading amount predictive value = [flow rate of electrode slurry × {1- (density of solvent in electrode slurry/density of electrode slurry)}]/A [Equation 2] 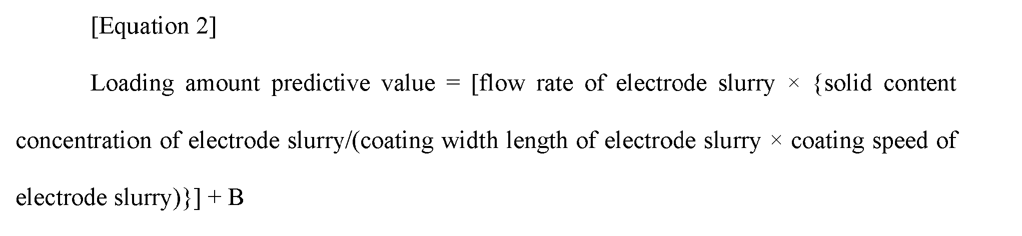 Loading amount predictive value = [flow rate of electrode slurry × {solid content concentration of electrode slurry/(coating width length of electrode slurry × coating speed of electrode slurry)}] + B

12. The coating method of the electrode slurry of claim 9, wherein when the (d) determining process is determined to be unsatisfactory, the process of (b) to (d) is repeated until the (d) determining process is determined to be satisfactory.

13. The coating method of the electrode slurry of claim 11, wherein in the (b) process of setting the RPM of the pump (140)
when a correction constant A of the equation 1 is determined, setting the RPM of the pump (140) so that the loading amount predictive value of the electrode slurry in the equation 1 satisfies the loading amount target value of the electrode slurry,
when the correction constant A of the equation 1 is not determined, the process comprises setting the RPM of the pump (140) so that the calculated loading amount predictive value of the electrode slurry according to the equation 2 satisfies the loading amount target value of the electrode slurry.

14. The coating method of the electrode slurry of claim 11, further comprises (f) a loading amount measuring process of measuring the loading amount of the electrode slurry coated on the electrode base substrate.

15. The coating method of the electrode slurry of claim 14, further comprises a process of calculating the correction constant A of the equation 1 such that the loading amount predictive value of the electrode slurry calculated by substituting the equation 1 is equal to the measured value of the loading amount of the electrode slurry, in a case in which the correction constant A of the equation 1 is not determined.

16. The coating method of the electrode slurry of claim 14, further comprises a process of recalculating the correction constant A of the equation 1, in a case in which the correction constant A of the equation 1 is determined, in a case in which the difference between the calculated loading amount predictive value of the electrode slurry according to the equation 1 and the measured value of the measured electrode slurry loading amount in the (f) loading amount measurement process exceeds a reference range.

17. The coating method of the electrode slurry of claim 9, wherein the (e) coating process, comprising:
(e-1) a process of measuring the flow rate of the electrode slurry and the density of the electrode slurry;
(e-2) a process of calculating the loading amount predictive value of the electrode slurry based on the measurement information;
(e-3) a determining process for determining whether the loading amount predictive value of the electrode slurry satisfies the loading amount management range of the electrode slurry; and
(e-4) a process of readjusting the RPM of the pump (140) in case in which it is determined to be unsatisfactory in the determining process.

18. The coating method of the electrode slurry of claim 9, wherein the coating process conditions comprise any one or two or more of a target value of the electrode slurry loading amount, a coating speed of the electrode slurry, a coating width length, and a solid content concentration of the electrode slurry.

## Patentansprüche

1. Elektrodensuspensions-Beschichtungssystem (100, 200) zum Auftragen einer Elektrodensuspension auf ein Elektrodenbasissubstrat,
wobei das Elektrodensuspensions-Beschichtungssystem (100, 200) umfasst:
ein Zuführrohr (130), das einen Zuführbehälter (110) zum Speichern einer Elektrodensuspension und eine Beschichtungsdüse (120) zum Auftragen der Elektrodensuspension auf ein Elektrodenbasissubstrat verbindet, wobei das Zuführrohr (130) ein Übertragungspfad für die Elektrodensuspension vom Zuführbehälter (110) zur Beschichtungsdüse (120) ist;
**dadurch gekennzeichnet, dass** das Elektrodensuspensions-Beschichtungssystem (100, 200) ferner umfasst:
einen Massendurchflussmesser (150), der auf dem Pfad des Zuführrohrs (130) installiert ist, zum Messen einer Durchflussrate der durch das Zuführrohr (130) übertragenen Elektrodensuspension und einer Dichte der Elektrodensuspension; und
eine Steuereinheit (160) zum Berechnen eines Vorhersagewerts der Beladungsmenge der Elektrodensuspension auf der Grundlage von durch den Massendurchflussmesser (150) gemessenen Messinformationen und zum Steuern des berechneten Vorhersagewerts der Beladungsmenge der Elektrodensuspension, um einen Beladungsmengen-Verwaltungsbereich zu erfüllen.

2. Elektrodensuspensions-Beschichtungssystem (100, 200) nach Anspruch 1, das ferner eine Pumpe (140) umfasst, die so konfiguriert ist, dass sie eine Antriebskraft zum Übertragen der Elektrodensuspension auf die Beschichtungsdüse (120) bereitstellt.

3. Elektrodensuspensions-Beschichtungssystem (100, 200) nach Anspruch 1, wobei die Steuereinheit (160) eine Recheneinheit umfasst, die den Vorhersagewert der Beladungsmenge der Elektrodensuspension berechnet, indem sie den Wert der Durchflussrate der Elektrodensuspension und den Wert der Dichte der Elektrodensuspension, die vom Massendurchflussmesser (150) gemessen werden, in die folgende Gleichung 1 und/oder Gleichung 2 einsetzt. [Gleichung 1] 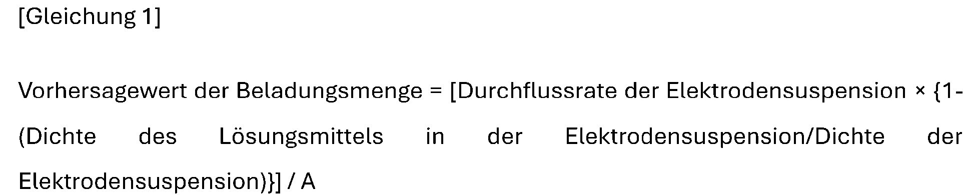 Vorhersagewert der Beladungsmenge = [Durchflussrate der Elektrodensuspension × {1-(Dichte des Lösungsmittels in der Elektrodensuspension/Dichte der Elektrodensuspension)}] / A [Gleichung 2] 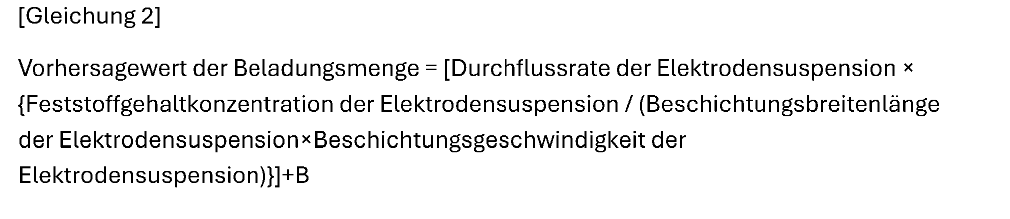 Vorhersagewert der Beladungsmenge = [Durchflussrate der Elektrodensuspension × {Feststoffgehaltkonzentration der Elektrodensuspension / (Beschichtungsbreitenlänge der Elektrodensuspension×Beschichtungsgeschwindigkeit der Elektrodensuspension)}]+B

4. Elektrodensuspensions-Beschichtungssystem (100, 200) nach Anspruch 3, ferner umfassend ein Beladungsmengen-Messinstrument zum Messen einer Beladungsmenge der auf die Elektrode aufgetragenen Elektrodensuspension,
wobei die Recheneinheit in einem Fall, in dem eine Korrekturkonstante A nicht bestimmt ist, so konfiguriert ist, dass sie die Korrekturkonstante A der Gleichung 1 aus einem von dem Beladungsmengen-Messinstrument gemessenen Beladungsmengen-Messwert der Elektrodensuspension und dem durch Einsetzen in die Gleichung 1 berechneten Vorhersagewert der Beladungsmenge der Elektrodensuspension berechnet.

5. Elektrodensuspensions-Beschichtungssystem (100, 200) nach Anspruch 2, wobei die Steuereinheit (160) so steuert, dass die Umdrehungen pro Minute (U/min) der Pumpe (140) eingestellt werden, bis der berechnete Vorhersagewert der Beladungsmenge der Elektrodensuspension den Beladungsmengen-Verwaltungsbereich erfüllt.

6. Elektrodensuspensions-Beschichtungssystem (100, 200) nach Anspruch 1, wobei die Steuereinheit (160) so steuert, dass der Elektrodenbeschichtungsprozess eingeleitet oder fortgesetzt wird, wenn der berechnete Vorhersagewert der Beladungsmenge der Elektrodensuspension den Beladungsmengen-Verwaltungsbereich erfüllt.

7. Elektrodensuspensions-Beschichtungssystem (100, 200) nach Anspruch 1, wobei die Steuereinheit (160) so steuert, dass ein Warnton erzeugt wird, wenn der berechnete Vorhersagewert der Beladungsmenge der Elektrodensuspension den Beladungsmengen-Verwaltungsbereich nicht erfüllt.

8. Elektrodensuspensions-Beschichtungssystem (100, 200) nach Anspruch 1, ferner umfassend eine Mensch-Maschine-Schnittstelle (HMI) (170) zur Kommunikation mit der Steuereinheit (160).

9. Verfahren zum Beschichten der Elektrodensuspension, **dadurch gekennzeichnet, dass** das Verfahren umfasst:
(a) einen Prozess des Einstellens einer Beschichtungsprozessbedingung gemäß einem Elektrodenmodell;
(b) einen Prozess des Einstellens einer U/min einer Pumpe (140);
(c) einen Prozess des Testbeschichtens der Elektrodensuspension auf ein Elektrodenbasissubstrat gemäß der eingestellten Beschichtungsprozessbedingung;
(d) einen Bestimmungsprozess zum Bestimmen, ob ein Vorhersagewert der Beladungsmenge der Elektrodensuspension einen Beladungsmengen-Verwaltungsbereich der Elektrodensuspension erfüllt; und
(e) wenn im Bestimmungsprozess festgestellt wird, dass er zufriedenstellend ist, Einleiten eines Beschichtungsprozesses zum Auftragen der Elektrodensuspension,
wobei der Prozess (c) des Testbeschichtens der Elektrodensuspension umfasst:
(c-1) Messen einer Durchflussrate der Elektrodensuspension und einer Dichte der Elektrodensuspension; und
(c-2) Berechnen eines Vorhersagewerts der Beladungsmenge der Elektrodensuspension auf der Grundlage von Messinformationen.

10. Verfahren zum Beschichten der Elektrodensuspension nach Anspruch 9, wobei bei dem Prozess (c-1) des Messens der Durchflussrate der Elektrodensuspension und der Dichte der Elektrodensuspension die Durchflussrate der Elektrodensuspension und die Dichte der Elektrodensuspension von einem Massendurchflussmesser (150) gemessen werden, der auf dem Pfad des Zuführrohrs (130) installiert ist.

11. Verfahren zum Beschichten der Elektrodensuspension nach Anspruch 9, wobei der Prozess (c-2) des Berechnens des Vorhersagewerts der Beladungsmenge der Elektrodensuspension berechnet wird, indem der Wert der Durchflussrate der Elektrodensuspension und der Wert der Dichte der Elektrodensuspension in die folgende Gleichung 1 und/oder Gleichung 2 eingesetzt werden, um den Vorhersagewert der Beladungsmenge der Elektrodensuspension zu berechnen. [Gleichung 1] 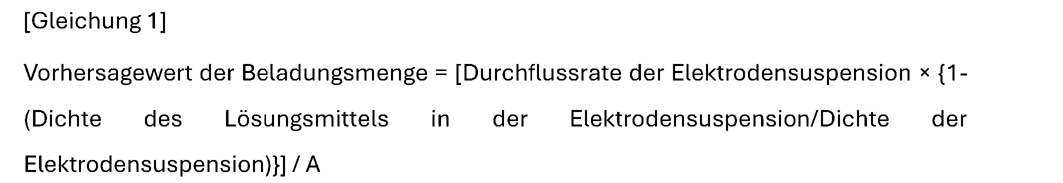 Vorhersagewert der Beladungsmenge = [Durchflussrate der Elektrodensuspension × {1-(Dichte des Lösungsmittels in der Elektrodensuspension/Dichte der Elektrodensuspension)}] / A [Gleichung 2] 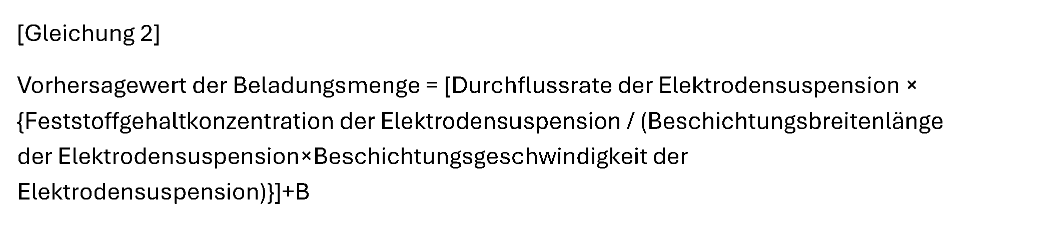 Vorhersagewert der Beladungsmenge = [Durchflussrate der Elektrodensuspension × {Feststoffgehaltkonzentration der Elektrodensuspension / (Beschichtungsbreitenlänge der Elektrodensuspension×Beschichtungsgeschwindigkeit der Elektrodensuspension)}]+B

12. Verfahren zum Beschichten der Elektrodensuspension nach Anspruch 9, wobei, wenn festgestellt wird, dass der Bestimmungsprozess (d) nicht zufriedenstellend ist, der Prozess von (b) bis (d) wiederholt wird, bis festgestellt wird, dass der Bestimmungsprozess (d) zufriedenstellend ist.

13. Verfahren zum Beschichten der Elektrodensuspension nach Anspruch 11, wobei im Prozess (b) des Einstellens der U/min der Pumpe (140),
wenn eine Korrekturkonstante A der Gleichung 1 bestimmt ist, die U/min der Pumpe (140) so eingestellt werden, dass der Vorhersagewert der Beladungsmenge der Elektrodensuspension in Gleichung 1 den Beladungsmengen-Zielwert der Elektrodensuspension erfüllt,
wenn die Korrekturkonstante A der Gleichung 1 nicht bestimmt ist, der Prozess das Einstellen der U/min der Pumpe (140) umfasst, so dass der berechnete Vorhersagewert der Beladungsmenge der Elektrodensuspension gemäß Gleichung 2 den Beladungsmengen-Zielwert der Elektrodensuspension erfüllt.

14. Verfahren zum Beschichten der Elektrodensuspension nach Anspruch 11, ferner umfassend (f) einen Beladungsmengen-Messprozess des Messens der Beladungsmenge der auf das Elektrodenbasissubstrat aufgetragenen Elektrodensuspension.

15. Verfahren zum Beschichten der Elektrodensuspension nach Anspruch 14, ferner umfassend einen Prozess des Berechnens der Korrekturkonstante A der Gleichung 1, so dass der durch Einsetzen in die Gleichung 1 berechnete Vorhersagewert der Beladungsmenge der Elektrodensuspension gleich dem Messwert der Beladungsmenge der Elektrodensuspension ist, in einem Fall, in dem die Korrekturkonstante A der Gleichung 1 nicht bestimmt ist.

16. Verfahren zum Beschichten der Elektrodensuspension nach Anspruch 14, ferner umfassend einen Prozess des Neuberechnens der Korrekturkonstante A der Gleichung 1 in einem Fall, in dem die Korrekturkonstante A der Gleichung 1 bestimmt ist, in einem Fall, in dem die Differenz zwischen dem berechneten Vorhersagewert der Beladungsmenge der Elektrodensuspension gemäß der Gleichung 1 und dem Messwert der gemessenen Beladungsmenge der Elektrodensuspension im Beladungsmengen-Messprozess (f) einen Referenzbereich überschreitet.

17. Verfahren zum Beschichten der Elektrodensuspension nach Anspruch 9, wobei der Beschichtungsprozess (e) umfasst:
(e-1) einen Prozess des Messens der Durchflussrate der Elektrodensuspension und der Dichte der Elektrodensuspension;
(e-2) einen Prozess des Berechnens des Vorhersagewerts der Beladungsmenge der Elektrodensuspension auf der Grundlage der Messinformationen;
(e-3) einen Bestimmungsprozess zum Bestimmen, ob der Vorhersagewert der Beladungsmenge der Elektrodensuspension den Beladungsmengen-Verwaltungsbereich der Elektrodensuspension erfüllt; und
(e-4) einen Prozess des Nachstellens der U/min der Pumpe (140) in einem Fall, in dem im Bestimmungsprozess festgestellt wird, dass er nicht zufriedenstellend ist.

18. Verfahren zum Beschichten der Elektrodensuspension nach Anspruch 9, wobei die Beschichtungsprozessbedingungen ein beliebiges oder zwei oder mehr aus einem Zielwert der Beladungsmenge der Elektrodensuspension, einer Beschichtungsgeschwindigkeit der Elektrodensuspension, einer Beschichtungsbreitenlänge und einer Feststoffgehaltkonzentration der Elektrodensuspension umfassen.

## Revendications

1. Système d'enduction de suspension d'électrode (100, 200) pour enduire une suspension d'électrode sur un substrat de base d'électrode,
le système d'enduction de suspension d'électrode (100, 200) comprenant :
un tuyau d'alimentation (130) raccordant une cuve d'alimentation (110) pour stocker une suspension d'électrode et une filière d'enduction (120) pour enduire la suspension d'électrode sur un substrat de base d'électrode, dans lequel le tuyau d'alimentation (130) est un trajet de transfert pour la suspension d'électrode de la cuve d'alimentation (110) à la filière d'enduction (120) ;
**caractérisé en ce que** le système d'enduction de suspension d'électrode (100, 200) comprend en outre :
un débitmètre massique (150) installé sur le trajet du tuyau d'alimentation (130), pour mesurer un débit de la suspension d'électrode transférée à travers le tuyau d'alimentation (130) et une masse volumique de la suspension d'électrode ; et
une unité de commande (160) pour calculer une valeur prédictive de quantité de charge de la suspension d'électrode sur la base d'une information de mesure mesurée par le débitmètre massique (150), et pour commander la valeur prédictive de quantité de charge calculée de la suspension d'électrode afin d'en satisfaire une plage de gestion de quantité de charge.

2. Système d'enduction de suspension d'électrode (100, 200) selon la revendication 1, comprenant en outre une pompe (140) configurée pour fournir une force d'entraînement pour transférer la suspension d'électrode vers la filière d'enduction (120).

3. Système d'enduction de suspension d'électrode (100, 200) selon la revendication 1, dans lequel l'unité de commande (160) comprend une unité de calcul qui calcule la valeur prédictive de quantité de charge de la suspension d'électrode en substituant la valeur de débit de la suspension d'électrode et la valeur de masse volumique de la suspension d'électrode mesurées par le débitmètre massique (150) dans l'équation 1 et/ou l'équation 2 suivantes. [Equation 1] 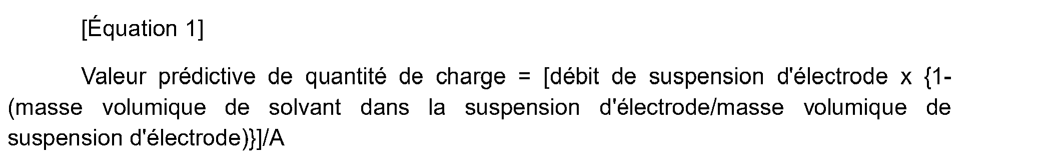 [Équation 1] Valeur prédictive de quantité de charge = [débit de suspension d'électrode x {1-(masse volumique de solvant dans la suspension d'électrode/masse volumique de suspension d'électrode)}]/A [Equation 2] 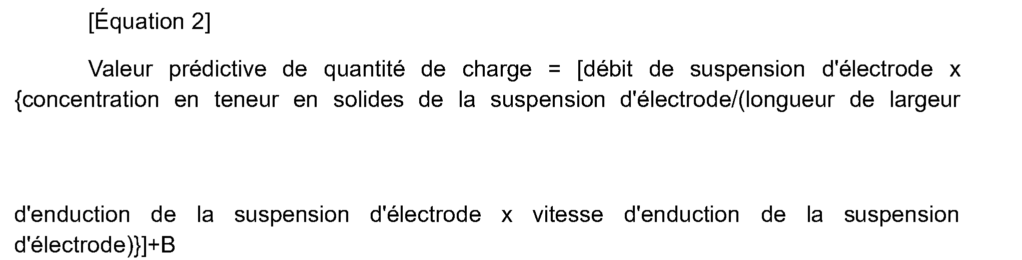 [Équation 2] Valeur prédictive de quantité de charge = [débit de suspension d'électrode x {concentration en teneur en solides de la suspension d'électrode/(longueur de largeur d'enduction de la suspension d'électrode x vitesse d'enduction de la suspension d'électrode)}]+B

4. Système d'enduction de suspension d'électrode (100, 200) selon la revendication 3, comprenant en outre un instrument de mesure de quantité de charge pour mesurer une quantité de charge de la suspension d'électrode enduite sur l'électrode,
dans lequel l'unité de calcul, dans un cas où une constante de correction A n'est pas déterminée, est configurée pour calculer la constante de correction A de l'équation 1 à partir d'une valeur mesurée de quantité de charge de la suspension d'électrode mesurée par l'instrument de mesure de quantité de charge et de la valeur prédictive de quantité de charge de la suspension d'électrode calculée par substitution dans l'équation 1.

5. Système d'enduction de suspension d'électrode (100, 200) selon la revendication 2, dans lequel l'unité de commande (160) commande le réglage du nombre de tours par minute (TPM) de la pompe (140) jusqu'à ce que la valeur prédictive de quantité de charge calculée de la suspension d'électrode satisfasse à la plage de gestion de quantité de charge.

6. Système d'enduction de suspension d'électrode (100, 200) selon la revendication 1, dans lequel l'unité de commande (160) commande le déclenchement ou la poursuite du processus d'enduction d'électrode lorsque la valeur prédictive de quantité de charge calculée de la suspension d'électrode satisfait à la plage de gestion de quantité de charge.

7. Système d'enduction de suspension d'électrode (100, 200) selon la revendication 1, dans lequel l'unité de commande (160) commande la génération d'un son d'avertissement lorsque la valeur prédictive de quantité de charge calculée de la suspension d'électrode ne satisfait pas à la plage de gestion de quantité de charge.

8. Système d'enduction de suspension d'électrode (100, 200) selon la revendication 1, comprenant en outre une interface homme-machine (IHM) (170) pour communiquer avec l'unité de commande (160).

9. Procédé d'enduction de la suspension d'électrode, **caractérisé en ce que** le procédé comprend :
(a) un processus de définition d'une condition de processus d'enduction selon un modèle d'électrode ;
(b) un processus de définition d'un nombre de TPM d'une pompe (140) ;
(c) un processus d'enduction d'essai de la suspension d'électrode sur un substrat de base d'électrode selon la condition de processus d'enduction définie ;
(d) un processus de détermination pour déterminer si une valeur prédictive de quantité de charge de la suspension d'électrode satisfait à une plage de gestion de quantité de charge de la suspension d'électrode ; et
(e) s'il est déterminé comme étant satisfaisant dans le processus de détermination, le déclenchement d'un processus d'enduction pour enduire la suspension d'électrode,
dans lequel le processus (c) d'enduction d'essai de la suspension d'électrode comprend :
(c-1) la mesure d'un débit de la suspension d'électrode et d'une masse volumique de la suspension d'électrode ; et
(c-2) le calcul d'une valeur prédictive de quantité de charge de la suspension d'électrode sur la base d'une information de mesure.

10. Procédé d'enduction de la suspension d'électrode selon la revendication 9, dans lequel, dans le processus (c-1) de mesure du débit de la suspension d'électrode et de la masse volumique de la suspension d'électrode, le débit de la suspension d'électrode et la masse volumique de la suspension d'électrode sont mesurés par un débitmètre massique (150) installé sur le trajet du tuyau d'alimentation (130).

11. Procédé d'enduction de la suspension d'électrode selon la revendication 9, dans lequel le processus (c-2) de calcul de la valeur prédictive de quantité de charge de la suspension d'électrode est calculé en substituant la valeur de débit de la suspension d'électrode et la valeur de masse volumique de la suspension d'électrode dans l'équation 1 et/ou l'équation 2 suivantes pour calculer la valeur prédictive de quantité de charge de la suspension d'électrode. [Equation 1] 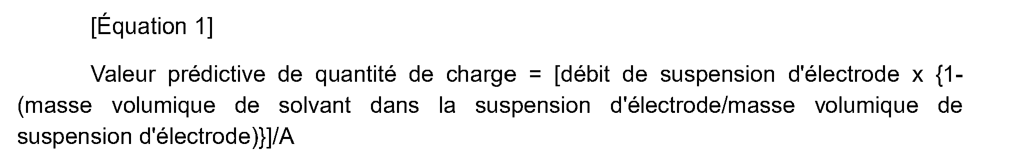 [Équation 1] Valeur prédictive de quantité de charge = [débit de suspension d'électrode x {1-(masse volumique de solvant dans la suspension d'électrode/masse volumique de suspension d'électrode)}]/A [Equation 2] 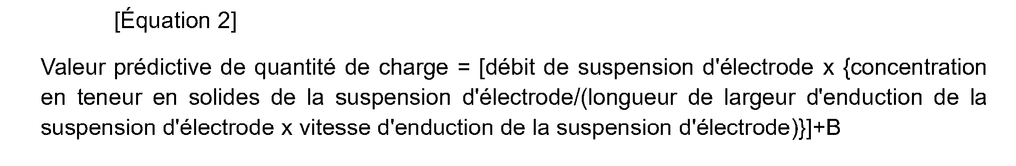 [Équation 2] Valeur prédictive de quantité de charge = [débit de suspension d'électrode x {concentration en teneur en solides de la suspension d'électrode/(longueur de largeur d'enduction de la suspension d'électrode x vitesse d'enduction de la suspension d'électrode)}]+B

12. Procédé d'enduction de la suspension d'électrode selon la revendication 9, dans lequel, lorsque le processus de détermination (d) est déterminé comme étant insatisfaisant, le processus de (b) à (d) est répété jusqu'à ce que le processus de détermination (d) soit déterminé comme étant satisfaisant.

13. Procédé d'enduction de la suspension d'électrode selon la revendication 11, dans lequel, dans le processus (b) de définition du nombre de TPM de la pompe (140),
lorsqu'une constante de correction A de l'équation 1 est déterminée, la définition du nombre de TPM de la pompe (140) est effectuée de sorte que la valeur prédictive de quantité de charge de la suspension d'électrode dans l'équation 1 satisfasse à la valeur cible de quantité de charge de la suspension d'électrode,
lorsque la constante de correction A de l'équation 1 n'est pas déterminée, le processus comprend la définition du nombre de TPM de la pompe (140) de sorte que la valeur prédictive de quantité de charge calculée de la suspension d'électrode selon l'équation 2 satisfasse à la valeur cible de quantité de charge de la suspension d'électrode.

14. Procédé d'enduction de la suspension d'électrode selon la revendication 11, comprenant en outre (f) un processus de mesure de quantité de charge pour mesurer la quantité de charge de la suspension d'électrode enduite sur le substrat de base d'électrode.

15. Procédé d'enduction de la suspension d'électrode selon la revendication 14, comprenant en outre un processus de calcul de la constante de correction A de l'équation 1 de sorte que la valeur prédictive de quantité de charge de la suspension d'électrode calculée par substitution dans l'équation 1 soit égale à la valeur mesurée de la quantité de charge de la suspension d'électrode, dans un cas où la constante de correction A de l'équation 1 n'est pas déterminée.

16. Procédé d'enduction de la suspension d'électrode selon la revendication 14, comprenant en outre un processus de recalcul de la constante de correction A de l'équation 1, dans un cas où la constante de correction A de l'équation 1 est déterminée, dans un cas où la différence entre la valeur prédictive de quantité de charge calculée de la suspension d'électrode selon l'équation 1 et la valeur mesurée de la quantité de charge de suspension d'électrode mesurée dans le processus de mesure de quantité de charge (f) dépasse une plage de référence.

17. Procédé d'enduction de la suspension d'électrode selon la revendication 9, dans lequel le processus d'enduction (e) comprend :
(e-1) un processus de mesure du débit de la suspension d'électrode et de la masse volumique de la suspension d'électrode ;
(e-2) un processus de calcul de la valeur prédictive de quantité de charge de la suspension d'électrode sur la base de l'information de mesure ;
(e-3) un processus de détermination pour déterminer si la valeur prédictive de quantité de charge de la suspension d'électrode satisfait à la plage de gestion de quantité de charge de la suspension d'électrode ; et
(e-4) un processus de réajustement du nombre de TPM de la pompe (140) dans le cas où il est déterminé comme étant insatisfaisant dans le processus de détermination.

18. Procédé d'enduction de la suspension d'électrode selon la revendication 9, dans lequel les conditions de processus d'enduction comprennent l'une quelconque ou deux ou plus d'une valeur cible de quantité de charge de la suspension d'électrode, d'une vitesse d'enduction de la suspension d'électrode, d'une longueur de largeur d'enduction, et d'une concentration en teneur en solides de la suspension d'électrode.
